(19) Europäisches Patentamt
European Patent Office
Office européen des brevets

(11) **EP 1 759 105 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(51) Int Cl.:
*F02D 41/00* *(2006.01)*   *F02D 13/02* *(2006.01)*

(21) Anmeldenummer: 05742928.4

(22) Anmeldetag: **30.03.2005**

(86) Internationale Anmeldenummer:
**PCT/EP2005/051438**

(87) Internationale Veröffentlichungsnummer:
**WO 2006/000474 (05.01.2006 Gazette 2006/01)**

(54) **VERFAHREN ZUR BESTIMMUNG DER LUFTMASSE IN EINEM ZYLINDER**

METHOD FOR DETERMINING THE AIR MASS IN A CYLINDER

PROCEDE POUR DETERMINER LA MASSE D'AIR PRESENTE DANS UN CYLINDRE

(84) Benannte Vertragsstaaten:
**DE FR GB IT**

(30) Priorität: **24.06.2004 DE 102004030604**

(43) Veröffentlichungstag der Anmeldung:
**07.03.2007 Patentblatt 2007/10**

(73) Patentinhaber: **Continental Automotive GmbH
30165 Hannover (DE)**

(72) Erfinder:
• **DINGL, Jürgen
93055 Regensburg (DE)**
• **ESER, Gerhard
93155 Hemau (DE)**

(56) Entgegenhaltungen:
**EP-A- 0 651 149    EP-A- 1 041 264
EP-A- 1 231 372**

• **BOSCH GMBH: "Kraftfahrtechnisches Taschenbuch, 21. Auflage" 1991, ROBERT BOSCH GMBH , GERMANY 419114 * Seite 368 ***

**Beschreibung**

Die vorliegende Erfindung betrifft ein Verfahren zur Bestimmung der Luftmasse in einem Zylinder einer Brennkraftmaschine mit einer Aufladevorrichtung und einer Einrichtung zur variablen Ansteuerung der Ventilüberschneidung der Gaswechselventile.

Aus DE 100 50 059 A1 ist eine Zylinderluftfüllungssteuerung bekannt, die abhängig von einem geforderten Drehmoment Ein- und Auslassventile verstellt. Bei der Verwendung eines Turboladers wird vorgeschlagen, zur Vermeidung der Verzögerung bei einer Drehmomenterhöhung, die Steuervorrichtung für Ein- und Auslassventile gleichzeitig zu öffnen, so dass bei positiver Druckdifferenz zwischen Ansaug- und Abgasseite ein Durchspülen von Ansaugluft zur Abgasseite auftritt.

Aus DE 100 51 416 A1 ist ein Verfahren zur Steuerung eines Motors bekannt, der eine elektronisch gesteuerte Einlass- und Auslassvorrichtung besitzt. Um eine rasche Veränderung des Luft-/Kraftstoffverhältnisses in den einzelnen Zylindern zu erzielen, wird die Auslassregelvorrichtung zur Steuerung des Luftstroms aus dem Ansaugkrümmer in den Zylinder eingesetzt.

Aus DE 100 51 425 A1 ist ein Motorsteuersystem für einen Direkteinspritzer mit veränderlicher Ventilsteuerzeit bekannt, bei dem mit Hilfe einer Nockensteuerung die Frischluftladung in den Zylinder schneller gesteuert wird. Das Verfahren erfasst ebenfalls die Änderung des Luft-/Kraftstoffverhältnisses in dem Zylinder und ändert die Ansteuerung der Auslasssteuervorrichtung dementsprechend. Zur Kompensation von fehlerhaften Berechnungen ist ein Krümmungsdrucksensor vorgesehen, der einen Druckfehler aus der Abweichung zwischen ermittelten Krümmerdruck und aktuellen Krümmerdruck berechnet.

Aus EP 1 243 779 A2 ist eine direkt einspritzende Brennkraftmaschine mit einem Turbolader zur Senkung des Verbrauchs, insbesondere im Vollastbetrieb bekannt. Zur Vermeidung von Klopfgeräuschen wird Restgas aus dem Zylinder herausgespült, in dem die Gaswechselventile gleichzeitig geöffnet werden.

In der EP 0 651 149 A1 ist eine Vorrichtung zur Steuerung der Kraftstoffeinspritzmenge bei Brennkraftmaschinen in Abhängigkeit vom Luftfluss in die Zylinder mit einer Zylinder-Luftflussermittlungsermittlungseinheit beschrieben. Die Zylinder-Luftflussermittlungseinheit ist mit einer Signalleitung eines variablen Nockenwellenverstellsystems zur Übertragung eines einer Nockenwellenverstellung proportionalen Messwertes verbunden. Des Weiteren weist diese Zylinder-Luftflussermittlungsermittlungseinheit mehrere Kennfelder auf, die jeweils in Abhängigkeit von einem aus diesem Messwert gebildeten Korrekturparameter auswählbar sind. In jedem Kennfeld sind Werte für den Luftfluss in die Zylinder in Abhängigkeit von mindestens einer Betriebsgröße der Brennkraftmaschine, die vorzugsweise unabhängig vom variablen Nockenwellenverstellsystem ist, vorgegeben. Die Daten der Kennfelder werden vorzugsweise empirisch ermittelt und in einem elektronischen Speicher nicht flüchtig abgespeichert.

Der Erfindung liegt die Aufgabe zugrunde, ein Verfahren zur Bestimmung der Luftmasse in einem Zylinder einer Brennkraftmaschine bereitzustellen, das mit einfachen Mitteln zuverlässig die in dem Zylinder zur Verfügung stehende Luftmasse bestimmt.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren betrifft Brennkraftmaschinen mit einer Aufladevorrichtung, beispielsweise einem Abgasturbolader und einer Einrichtung zur variablen Ansteuerung einer Ventilüberschneidung der Gaswechselventile. Das erfindungsgemäße Verfahren arbeitet mit mindestens zwei Kennlinien. Die erste Kennlinie gibt als Referenzkennlinie die Luftmasse im Zylinder an, die abhängig von den Betriebsbedingungen einen linearen Zusammenhang zwischen Luftmasse im Zylinder und dem Druck im Ansaugrohr beschreibt. Wenn der Saugrohrdruck den Abgasgegendruck übersteigt, wird aufgrund einer zweiten Kennlinie ein Wert für den Fanggrad bestimmt und mit diesem der Wert der Luftmasse aus der Referenzkennlinie korrigiert. Bei dem erfindungsgemäßen Verfahren wird die Luftmasse in dem Zylinder durch einen linearen Zusammenhang zwischen Luftmasse und Druck im Ansaugtrakt beschrieben. Die durch das Spülen, also im Bereich, in dem der Ansaugdruck größer als der Abgasgegendruck ist, werden die Luftwerte mit Hilfe des Fanggrades korrigiert.

Der Fanggrad, auch als Trapping efficiency (TE) bezeichnet, wird bevorzugt wie folgt definiert:

$$TE = \frac{m_{cyl}}{m_{eng}}$$

wobei $m_{cyl}$ die nach dem Ladungswechsel in dem Zylinder verbleibende Luftmasse angibt und $m_{eng}$ die gesamte beim Ladungswechsel aus dem Zylinder ausgetretene Luftmasse bezeichnet. Das Verhältnis dieser Luftmassen ist besonders gut geeignet, um den Spüleffekt in dem zylinder zu kennzeichnen. Die Korrektur des Werts aus der Referenzkennlinie erfolgt multiplikativ.

In einer bevorzugten Weiterbildung des erfindungsgemäßen Verfahrens wird, wenn der Saugrohrdruck kleiner oder gleich dem Abgasgegendruck ist, der Wert der Luftmasse aus der Referenzkennlinie mit einem Wert für das in dem Brennraum verbleibende Restgas korrigiert. Beispielsweise ist die Luftmasse für das Restgas in einer Kennlinie abhängig von den Betriebsbedingungen über dem Druck im Ansaugtrakt definiert, so dass der Wert für das Restgas zur Korrektur des Werts aus der Referenzkennlinie subtrahiert wird. Bevorzugt läuft die Kennlinie für die Luftmasse des Restgases unterhalb eines vorbestimmten Druckwerts im wesentlichen proportional zu dem Ansaugrohrdruck.

In einer bevorzugten Weiterbildung ist mindestens eine der zusätzlichen Betriebsbedingungen, von denen die Kennlinie für den Fanggrad und/oder das Restgas abhängen, aus der folgenden Gruppe ausgewählt:

Drehzahl,
Ventilsteuerzeiten und
Umgebungstemperatur und/oder -druck.

In einer besonders bevorzugten Ausgestaltung wird der Wert für den Fanggrad an eine Steuereinheit zur Berechnung des Drehmoments und/oder zur Zündkorrektur weitergeleitet. Es hat sich als besonders vorteilhaft erwiesen, wenn der Wert für die Luftmasse in dem Zylinder und der durch das Spülen bestimmte Korrekturwert gesondert an nachgeordnete Steuereinheiten weitergeleitet werden, anstatt direkt einen korrigierten Wert für die Luftmasse in dem Zylinder.

Das erfindungsgemäße Verfahren wird nachfolgend anhand von zwei Figuren näher erläutert. Es zeigt:

Fig. 1    eine schematische Ansicht einer Brennkraftmaschine und

Fig. 2    den Verlauf der in einen Zylinder einströmenden Luftmasse abhängig von dem Ansaugrohrdruck.

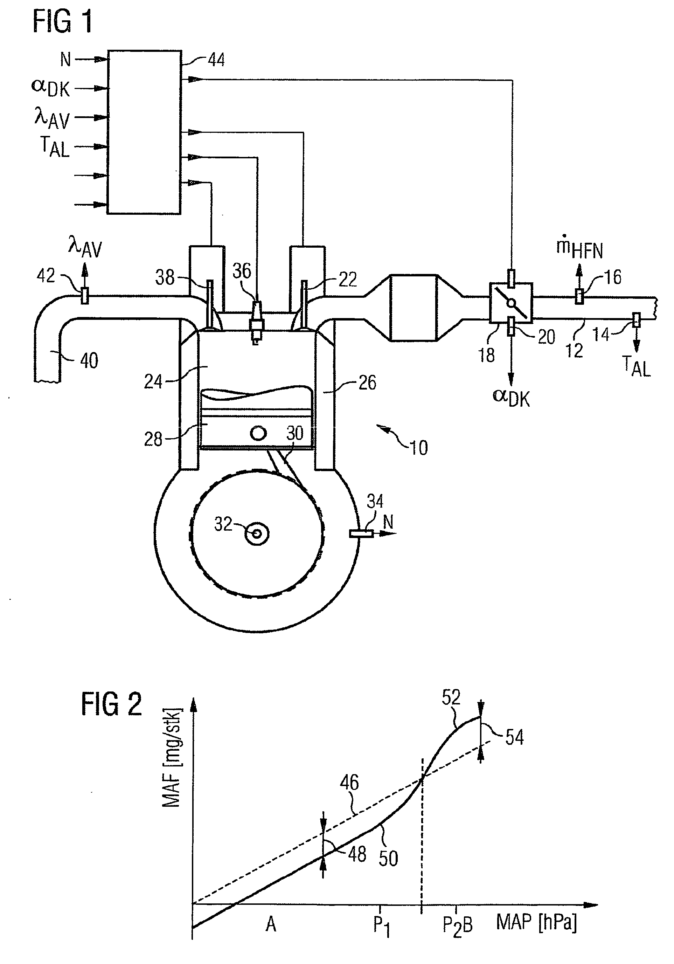

Fig. 1 zeigt eine Brennkraftmaschine 10 mit einem Zylinder 26. Selbstverständlich kann das erfindungsgemäße Verfahren auch bei Brennkraftmaschinen mit mehr als einem Zylinder eingesetzt werden. Über einen Ansaugtrakt 12 wird Frischluft angesaugt, deren Temperatur ($T_{AL}$) über einen Temperatursensor 14 erfasst wird. Die eintretende Luftmasse wird beispielsweise durch einen Luftmassensensor 16 gemessen. Es ist ebenfalls möglich, statt des Luftmassensensors einen Drucksensor als Lastsensor vorzusehen, der zwischen einer Drosselklappe 18 und einem Einlassventil 22 positioniert ist. Die Drosselklappe 18 steuert den Luftmassenstrom in den Einlasstrakt 12, wobei zur genaueren Regelung ein Sensor 20 die Winkelposition der Drosselklappe erfasst.

Über das Einlassventil 22 tritt die Frischluft in den Zylinderinnenraum 24 ein. Der Zylinder 26 ist schematisch dargestellt und besitzt einen Kolben 28 mit einer Pleuelstange 30, die die Kurbelwelle 32 antreibt. Die Drehzahl der Kurbelwelle wird von einem Drehzahlsensor 34 erfasst.

Die Kraftstoffeinspritzung ist in den Figuren nicht näher dargestellt. Der eingespritzte Kraftstoff wird über die Zündeinrichtung 36 gezündet. Nach der Zündung wird das Restgas über das Auslassventil 38 in den Abgastrakt 40 entlassen. Im Abgastrakt misst eine Lambdasonde 42 den im Abgas enthaltenen Sauerstoff.

Die Steuerung der Brennkraftmaschine erfolgt über eine Motorsteuerung 44 an der als Eingangsgröße u.a. die Drehzahl N, der Drosselklappenwinkel $\alpha_{DK}$, der Sauerstoffgehalt $\lambda_{AV}$ und die Umgebungstemperatur $T_{AL}$ der angesaugten Frischluft anliegen. Ferner liegt auch der gemessene Wert für die angesaugte Frischluft $dm_{HFN}/dt$ an der Motorsteuerung 44 an.

Fig. 2 zeigt den Modellansatz zu dem Luftmassenstrom in den Zylinder abhängig von dem Druck im Ansaugrohr (MAP). Ist der Druck im Ansaugrohr kleiner als der Abgasgegendruck, so ergeben sich die Werte im Intervall A in Fig. 2. Ist der Saugrohrdruck größer als der Abgasgegendruck, so liegen die Druckwerte im Intervall B. Fig. 2 zeigt eine Normschluckkennlinie 46, die den linearen Zusammenhang zwischen Luftmasse im Zylinder (MAF) und Druck im Saugrohr (MAP) beschreibt. Die Normschluckkennlinie 46 berücksichtigt nicht die durch die Ventilüberschneidung auftretenden Effekte.

Im Intervall A wird von der Normschluckkennlinie 46 ein Wert 48 für das im Zylinder verbleibende Restgas subtrahiert. Neben der Subtraktion ist natürlich selbstverständlich auch die Betrachtung eines multiplikativen Faktors möglich. In Fig. 2 dargestellt ist das Ergebnis 50 der Korrektur. Unterhalb eines ersten kritischen Werts P1 besitzt die Luftmasse MAF abhängig von dem Ansaugdruck MAP einen im wesentlichen linearen Verlauf, der die gleiche Steigung wie die Normschluckkennlinie 46 aufweist.

Im Intervall B liegt die Masse der im Zylinder verbleibenden Luft oberhalb der Normschluckkennlinie 46. Die Werte der Luftmasse 52 besitzen hierbei im wesentlichen oberhalb eines kritischen Werts P2 einen linearen Verlauf, parallel zur Normschluckkennlinie 46. Die Erhöhung 54 durch die aufgrund des Spülens in dem Brennraum verbleibende Luftmasse kann von der im Intervall A auftretenden Luftmasse, die die Normschluckkennlinie 46 erniedrigt, verschieden sein.

Im Übergangsbereich von P1 bis P2 zeigt die korrigierte Kurve einen im wesentlichen nicht linearen, s-förmigen Verlauf.

In einer weiteren Ausgestaltung der Erfindung wird die Trapping efficiency über Kennfelder abhängig von der Stellung des Ventiltriebs, der Motordrehzahl, dem Saugrohrdruck und dem Abgasgegendruck aufgenommen. Je nach Ausgestaltung kann bei der Bestimmung die Trapping efficiency dann der Abgasgegendruck in der Berechnung berücksichtigt werden oder nicht. In einer konkreten Ausgestaltung hängt die Trapping efficiency (EFF_TRAP) von der Motordrehzahl N, der Ventilüberschneidung VO, dem Abgasgegendruck PRS_EX, dem Saugrohrdruck MAP und einem Wahlschalter LC_PRS_EX_SCAV_C ab, der angibt, ob der Abgasgegendruck in die Berechnung eingeht.

**Patentansprüche**

1.    verfahren zur Bestimmung einer Luftmasse in einem Zylinder (26) einer Brennkraftmaschine (10) mit einer Aufladevorrichtung und einer Einrichtung zur variablen Ansteuerung der Ventilüberschneidung der Gaswechselventile (22, 38), **dadurch gekennzeichnet, dass**

- eine Referenzkennlinie (46) für die Luftmasse im Zylinder definiert ist, die abhängig von den Betriebsbedingungen einen linearen Zusammenhang zwischen Luftmasse im Zylinder (26) und dem Druck im Ansaugrohr (12) beschreibt, und
- wenn der Saugrohrdruck den Abgasgegendruck übersteigt, wird der Wert der Luftmasse aus der Referenzkennlinie (46) mit einem Wert für den Fanggrad korrigiert, der als Kennlinie abhängig von Betriebsbedingungen über dem Druck im Ansaugtrakt (12) definiert ist.

2. Verfahren nach Anspruch 1, **dadurch gekennzeichnet, dass** der Fanggrad als Quotient aus der nach dem Ladungswechsel in dem Zylinder (26) verbleibenden Luftmasse und der gesamten beim Ladungswechsel aus dem Zylinder (26) ausgetretenen Luftmasse bestimmt wird.

3. Verfahren nach Anspruch 1 oder 2, **dadurch gekennzeichnet, dass** wenn der Saugrohrdruck kleiner oder gleich dem Abgasgegendruck ist, der Wert der Luftmasse aus der Referenzkennlinie mit einem Wert für das im Brennraum verbleibende Restgas korrigiert wird, wobei die Luftmasse für das Restgas in einer Kennlinie abhängig von Betriebsbedingungen über dem Druck im Ansaugtrakt definiert ist.

4. Verfahren nach Anspruch 3, **dadurch gekennzeichnet, dass** die Kennlinie für die Luftmasse des Restgases unterhalb eines vorbestimmten Druckwerts (P1) im wesentlichen proportional zu dem Ansaugrohrdruck verläuft.

5. verfahren nach einem der Ansprüche 1 bis 4, **dadurch gekennzeichnet, dass** die Kennlinie für den Fanggrad ab einem Druckwert (P2) im wesentlichen proportional zum Ansaugrohrdruck verläuft.

6. Verfahren nach einem der Ansprüche 1 bis 5, **dadurch gekennzeichnet, dass** mindestens eine der Betriebsbedingungen, von der die Kennlinien für den Fanggrad und/oder das Restgas abhängt, aus der folgenden Gruppe ausgewählt ist:

Drehzahl,
Ventilsteuerzeiten und
Umgebungstemperatur und/oder -druck.

7. Verfahren nach einem der Ansprüche 1 bis 6, **dadurch gekennzeichnet, dass** der als Kennlinie abgelegte Fanggrad an einer Steuereinheit zur Berechnung des Drehmoments und/oder zur Zündkorrektur weitergeleitet wird.

**Claims**

1. Method for determining an air mass in a cylinder (26) of an internal combustion engine (10) with a supercharging device and a facility for variable activation of the valve overlap of the gas exchange valves (22, 38),
**characterised in that**

- a reference characteristic curve (46) is defined for the air mass in the cylinder, describing a linear relationship between the air mass in the cylinder (26) and the pressure in the intake pipe (12) as a function of the operating conditions and
- if the intake pipe pressure exceeds the exhaust gas counterpressure, the value of the air mass from the reference characteristic curve (46) is corrected using a value for the trapping efficiency, which is defined as a characteristic curve as a function of operating conditions over the pressure in the intake duct (12).

2. Method according to claim 1, **characterised in that** the trapping efficiency is defined as a quotient of the air mass remaining in the cylinder (26) after the charge exchange and the total air mass leaving the cylinder (26) during the charge exchange.

3. Method according to claim 1 or 2, **characterised in that**, if the intake pipe pressure is less than or equal to the exhaust gas counterpressure, the value of the air mass from the reference characteristic curve is corrected using a value for the residual gas remaining in the combustion chamber, with the air mass for the residual gas being defined in a characteristic curve as a function of operating conditions over the pressure in the intake duct.

4. Method according to claim 3, **characterised in that** the characteristic curve for the air mass of the residual gas runs below a predetermined pressure value (P1) in a manner that is essentially proportional to the intake pipe pressure.

5. Method according to one of claims 1 to 4, **characterised in that** from a pressure value (P2) the characteristic curve for the trapping efficiency runs in a manner that is essentially proportional to the intake pipe pressure.

6. Method according to one of claims 1 to 5, **characterised in that** at least one of the operating conditions, of which the characteristic curves for the trapping efficiency and/or the residual gas are a function, is selected from the following group:

> rotation speed,
> valve control times and
> ambient temperature and/or pressure.

**7.** Method according to one of claims 1 to 6, **characterised in that** the trapping efficiency stored as a characteristic curve is forwarded to a control unit for calculation of the torque and/or ignition correction.

## Revendications

**1.** Procédé pour déterminer une masse d'air dans un cylindre (26) d'un moteur à combustion interne (10) comprenant un dispositif de chargement et un dispositif pour la commande variable du recouvrement de soupapes des soupapes d'échange des gaz (22, 38), **caractérisé en ce qu'**

> - il est défini pour la masse d'air dans le cylindre une droite caractéristique de référence (46) qui décrit une relation linéaire entre la masse d'air dans le cylindre (26) et la pression dans la tubulure d'aspiration (12) en fonction des conditions de fonctionnement, et **en ce que**
> - lorsque la pression dans la tubulure d'aspiration dépasse la contrepression d'échappement, la valeur de la masse d'air déduite de la droite caractéristique de référence (46) est corrigée avec d'une valeur du coefficient de gaz résiduels, qui est définie comme droite caractéristique en fonction des conditions de fonctionnement au dessus de la pression dans le trajet d'aspiration (12).

**2.** Procédé selon la revendication 1, **caractérisé en ce que** le coefficient de gaz résiduels est déterminé comme étant le quotient de la masse d'air subsistant dans le cylindre (26) après le changement de charge, par la masse d'air totale échappé du cylindre (26) lors d'un changement de charge.

**3.** Procédé selon la revendication 1 ou 2, **caractérisé en ce que**, lorsque la pression dans la tubulure d'aspiration est inférieure ou égale à la contrepression des gaz d'échappement, la valeur de la masse d'air déduite de la droite caractéristique de référence est corrigée avec d'une valeur pour les gaz résiduels subsistant dans la cambre de combustion, la masse d'air des gaz résiduels étant définie selon une droite caractéristique, en fonction des conditions de fonctionnement, au dessus de la pression dans le trajet d'aspiration.

**4.** Procédé selon la revendication 3, **caractérisé en ce que** la droite caractéristique pour la masse d'air des gaz résiduels présente une allure essentiellement proportionnelle à la pression dans la tubulure d'aspiration, lorsque la pression est située en dessous d'une valeur prédéterminée (P1).

**5.** Procédé selon l'une des revendications 1 à 4, **caractérisé en ce que** la droite caractéristique du coefficient de gaz résiduels présente une allure essentiellement proportionnelle à la pression dans la tubulure d'aspiration au-delà d'une valeur de pression (P2).

**6.** Procédé selon l'une des revendications 1 à 5, **caractérisé en ce qu'**au moins l'une des conditions de fonctionnement dont dépendent les droites caractéristiques pour le coefficient de gaz résiduels et/ou pour les gaz résiduels est choisie dans le groupe suivant : vitesse de rotation, temps de commande des soupapes et température et/ou pression ambiantes.

**7.** Procédé selon l'une des revendications 1 à 6, **caractérisé en ce que** le coefficient de gaz résiduels enregistré sous la forme d'une droite caractéristique est transmis à une unité de commande pour faire le calcul du couple de rotation et/ou pour corriger l'allumage.

## FIG 1

N →

$\alpha_{DK}$ →

$\lambda_{AV}$ →

$T_{AL}$ →

→

→

44

$\dot{m}_{HFN}$

16

$\lambda_{AV}$

42

38    36    22

20

18    12    14

$\alpha_{DK}$

$T_{AL}$

40

24    26

28    30

10

32

34

N

## FIG 2

MAF [mg/stk]

52

54

46

48    50

A    P₁    P₂B    MAP [hPa]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10050059 A1
- DE 10051416 A1
- DE 10051425 A1
- EP 1243779 A2
- EP 0651149 A1